(19) **Europäisches Patentamt**

**European Patent Office**

**Office européen des brevets**

(11) Veröffentlichungsnummer : **0 319 694 B1**

(12) # EUROPÄISCHE PATENTSCHRIFT

(45) Veröffentlichungstag der Patentschrift :
**12.06.91 Patentblatt 91/24**

(21) Anmeldenummer : **88117989.9**

(22) Anmeldetag : **28.10.88**

(51) Int. Cl.⁵ : **B60B 23/12**

(54) **Spurverstellrad.**

(30) Priorität : **09.12.87 DE 3741640**

(43) Veröffentlichungstag der Anmeldung :
**14.06.89 Patentblatt 89/24**

(45) Bekanntmachung des Hinweises auf die
Patenterteilung :
**12.06.91 Patentblatt 91/24**

(84) Benannte Vertragsstaaten :
**AT DE ES FR GB IT**

(56) Entgegenhaltungen :
**EP-A- 0 025 677
DE-U- 1 835 325
US-A- 2 175 294
PATENT ABSTRACTS OF JAPAN, Band 7, Nr.
217 (M-245)[1362], 27. September 1983; &
JP-A-58 112 803 (ISEKI NOKI K.K.) 05-07-1983**

(73) Patentinhaber : **LEMMERZ-WERKE KGaA
Ladestrasse
W-5330 Königswinter 1 (DE)**

(72) Erfinder : **Aderer, Peter
Siebengebirgsstrasse 94
W-5330 Königswinter 41 (Thomasberg) (DE)**

(74) Vertreter : **Vollbach, Hans, Dipl.-Ing. et al
Patentanwälte Dipl.-Ing. Buschhoff Dipl.Ing
Hennicke Dipl.-Ing. Vollbach
Kaiser-Wilhelm-Ring 24
W-5000 Köln 1 (DE)**

**Beschreibung**

Die Erfindung betrifft ein Spurverstellrad, insbesondere für Schlepper u.dgl., mit einer an Halteböckchen der Felge lösbar und versetzbar angeordneten Radschüssel, wobei die über den Innenumfang der Felge verteilt angeordneten Halteböckchen im Querschnitt etwa U-förmig ausgebildet sind und an ihren Schenkeln, die mit fluchtenden Bolzenlöchern für der Radschüsselbefestigung dienende axiale Schrauben versehen sind, nach außen gerichtete, sich gegen den Felgenboden legende Flansche aufweisen, an denen sie mittels in Felgenumfangsrichtung verlaufender Schweißnähte mit der Felge verbunden sind.

Spurverstellräder werden zur Spurweiteneinstellung vor allem bei Ackerschleppern und sonstigen Fahrzeugen für den land- und forstwirtschaftlichen Einsatz verwendet. Die gebräuchlichen Spurverstellräder weisen Radschüsseln auf, die mittels Befestigungsschrauben in unterschiedlichen axialen Einstellpositionen an der Radfelge anschließbar sind. Die Felgen sind dabei mit über ihren Innenumfang verteilt angeordneten angeschweißten Halteböckchen versehen, an denen die mehrlappige Radschüssel mit Hilfe der Schrauben angeschlossen wird. Dabei ergeben sich bei den bekannten Spurverstellrädern aus der jeweiligen Stellung der Felge zur Radschüssel bzw. der Radschüssel zum Radnabenflansch verschiedene Spurverstellmöglichkeiten, und zwar im allgemeinen acht Spureinstellungen. Bei einem Spursprung von im im allgemeinen 100 mm läßt sich demgemäß die Spurweite eines Schleppers um 700 mm verändern.

In der Vergangenheit sind zahlreiche Gestaltungsformen für die der Schraubenbefestigung der Radschüssel dienenden Halteböckchen vorgeschlagen und verwendet worden, unter anderem etwa U-förmige, winkel- oder S-förmige Halteböckchen oder auch sogenannte Omega-Böckchen. Die bekannten Halteböckchen werden mittels axialer Schweißnähte oder mittels in Felgenumfangsrichtung verlaufender Schweißnähte, gelegentlich aber auch mittels einer Kombination beider Schweißnähte mit der Felge verbunden (DE-PS 837 649, GB-PS 666 112, DE-PS 22 47 007, DE-GM 76 05 257, EP-PS 0 025 677). In der Vergangenheit hat man aber auch schon vorgeschlagen, für die Verbindung von Felge und Radschüssel andere Verbindungsarten, z.B. Niet- oder Klemmverbindungen, vorzusehen. Bekannt ist z.B. ein Spurverstellrad, bei dem die Felge mittels axialer Schrauben, Exzenterbolzen und Klemmstücke an einer umlaufenden radialen Rille oder Einpressung des Felgenbodens am Radkörper festgelegt wird. Zur drehschlüssigen Verbindung der Felge mit dem Radkörper werden dabei Anschlagnocken am Felgenboden angeordnet (US-PS 2 254 361).

Es ist auch seit langem bekannt, für Spurverstellräder und andere Räder vierlappige Radschüsseln zu verwenden, die sich materialsparend und damit kostengünstig aus quadratischen Blechzuschnitten herstellen lassen (FR-PS 871 754). Bei Spurverstellrädern erfolgt hier die Schraubenbefestigung der Radschüssel an der Felge an den vier Schüsselecken bzw. -lappen entweder jeweils mittels nur einer einzigen Befestigungsschraube oder aber mittels eines Schraubenpaares, wobei an den Befestigungsstellen entweder Einzel- oder auch Doppel-Halteböckchen vorgesehen werden (EP-PS 0 025 677).

Unabhängig von den zahlreichen bekannten Ausgestaltungsformen der Halteböckchen sind diese in der Vergangenheit stets so an den Felgen angeschweißt worden, daß die im Einsatz auf das Rad wirkenden axialen und radialen Kräfte, ebenso wie das Antriebsdrehmoment, über die Verbindungen bzw. die Schweißnähte übertragen werden. Die im Einsatz auftretenden außerordentlich hohen Radbelastungen, die häufig als Stoßkräfte wirken, führen zu beträchtlichen Beanspruchungen und entsprechend starken Verformungen der Halteböckchen und damit auch zu höchst ungünstigen Beanspruchungen der Schweißverbindungen, so daß es bei bestimmten Einsatzbedingungen der Schlepper nicht selten zu einem Bruch der Schweißnähte und/oder der Halteböckchen kommt. Ein Bruch der Schweißverbindungen läßt sich durch eine mit erhöhtem Fertigungsaufwand verbundene Verstärkung der Halteböckchen nicht zuverlässig ausschließen.

Es ist daher Aufgabe der Erfindung, ein wirtschaftlich herzustellendes Spurverstellrad mit verbesserten Festigkeitseigenschaften der Verbindungen zwischen Halteböckchen und Felge und damit insgesamt der Radschüsselbefestigung unter Entlastung der Schweißverbindungen zu schaffen.

Diese Aufgabe wird bei einem Spurverstellrad der eingangs genannten Art erfindungsgemäß dadurch gelöst, daß die Felge als Doppeltiefbettfelge ausgebildet ist und die Halteböckchen mit einem der Tiefbettbreite angepaßten Innenabstand ihrer Schenkel ausgebildet sind, sich mit ihren Schenkelendbereichen der Außenkontur der Tiefbettflanken und ihrer Tiefbettradien eng anschmiegen und sich mit ihren Schenkeln in Axialrichtung des Spurverstellrades an den Tiefbettflanken formschlüssig abstützen.

Bei der erfindungsgemäßen Ausgestaltung des Spurverstellrades erfolgt demgemäß eine formschlüssige Abstützung der Halteböckchen auf der Nabenseite der Felge an den Tiefbettflanken, so daß die in Achsrichtung des Rades wirkenden Kräfte, also die Axialkräfte durch den Formschluß zwischen den Halteböckchen und den Tiefbettflanken aufgenommen werden. Gleichzeitig erfolgt durch die aufgebrachten Schraubenvorspannkräfte der Verbindung Radschüssel-Halteböckchen-Felge ein Kraftschluß zwischen Halteböckchen und Felgentiefbett, der die in radialer und tangentialer Richtung wirkenden Kräfte aus Radbelastung, Antriebs- und Bremsmomenten und Stoßkräften aufnimmt. Durch diesen Form- und Kraftschluß werden die Schweißverbindungen von Kräften weitgehend entlastet, die sonst ausschließlich über die Schweißnähte und die Fußradien der Halteböckchen geleitet werden. Damit ergibt sich eine stark verminderte und insgesamt eine wesentlich günstigere Beanspruchung der Halteböckchenradien und der Schweißnähte, so daß Halteböckchen- und Schweißnahtbrüche wirksam vermieden werden können. Auch werden aufgrund der Seitenabstützung der Halteböckchen an den Tiefbettflanken übermäßige Verformungen der Halteböckchen ausgeschlossen.

Die bei dem erfindungsgemäßen Spurverstellrad verwendete Doppeltiefbettfelge (im Räderbau als DW-Felge bezeichnet) ist vorzugsweise bezüglich der Lage des Tiefbettes asymmetrisch derart ausgebildet, daß das Tiefbett gegenüber der Felgenmitte um ein dem Spursprung angepaßtes Maß in Achsrichtung versetzt ist, so daß sich die eine Flanke des Tiefbettes in kleinerem Abstand zu der Felgenmitte befindet als die andere Flanke des Tiefbettes. Bei dieser Felge ist demgemäß die Lage des der Seitenabstützung der Halteböckchen dienenden Tiefbettes auf das Spurverstellmaß, d.h. den Spursprung, so abgestimmt, daß sich acht Spurweiteneinstellungen mit untereinander gleichem Spursprung von z.B. 100 mm erreichen lassen.

Für die Halteböckchen werden bei dem erfindungsgemäßen Spurverstellrad etwa U-förmig ausgebildete Böckchen verwendet, deren beide etwa parallele U-Schenkel in ihrem gegenseitigen Abstandsmaß der Tiefbettbreite angepaßt sind, um die genannte formschlüssige Flächenabstützung, an den Tiefbettflanken zu erreichen. Solche Halteböckchen lassen sich z.B. aus Blech günstig herstellen. Falls erforderlich, können die U-Böckchen aber auch mit Aussteifungen u.dgl. versehen werden, z.B. in Gestalt von Versteifungsstegen, Rohrstücken u.dgl., die etwa parallel zum U-Steg zwischen die U-Schenkel eingeschaltet werden. Solche verstärkten U-Böckchen sind bei Spurverstellrädern bekannt. Dadurch, daß die Halteböckchen an ihren axial nach außen gerichteten Flanschen über die in Felgenumfangsrichtung verlaufenden Schweißnähte mit der Felge verbunden werden, ergibt sich auch eine von der Beanspruchung und von der Durchführung der Schweißarbeit her günstige Lage der Schweißnähte.

Die Anordnung wird vorteilhafterweise so getroffen, daß die Halteböckchen mit ihren Schenkeln unter Vorspannung an den Tiefbettflanken anliegen. Dies besagt, daß die Halteböckchen so gefertigt werden, daß der Innenabstand ihrer beiden Schenkel im Abstützbereich etwas kleiner ist als der Abstand der Außenflächen der Tiefbettflanken, so daß beim Aufstecken der Halteböckchen auf die Tiefbettausformung der Felge die Schenkel der Halteböckchen etwas elastisch ausgestellt, die Halteböckchen also elastisch aufgeweitet werden und dann mit Vorspannung ihrer Schenkel an den Tiefbettflanken anliegen. Die auf diese Weise erzielte Verspannung bewirkt einen festen Sitz der Halteböckchen an der Tiefbettausformung bei zugleich guter Flächenanlage ; sie verhindert außerdem, daß beim Festziehen der die Radschüssel an den Halteböckchen festlegenden Schrauben die in Umfangrichtung verlaufenden Schweißnähte von den axialen Schraubenkräften belastet werden.

Die Erfindung ermöglicht es weiterhin, die Schraubenbefestigungen der Radschüssel an den Halteböckchen in verhältnismäßig dichtem radialen Abstand zu dem Tiefbett der Felge vorzunehmen, was festigkeitsmäßig günstig ist. Demgemäß werden die Bolzenlöcher der Halteböckchen zweckmäßig so angeordnet, daß sich die Schrauben in dem gewünschten engen radialen Abstand zum Boden des Felgentiefbettes befinden. Untersuchungen haben gezeigt, daß das Verhältnis vom Innendurchmesser des Felgentiefbettes zum Anschraublochkreis der Radschüssel höchstens etwa 1,06 betragen sollte.

Im Hinblick auf eine wirtschaftliche Fertigung des erfindungsgemäßen Spurverstellrades vorteilhaft ist es ferner, wenn die Halteböckchen, wie bekannt, als Doppelböckchen für den Anschluß einer vierlappigen Radschüssel ausgebildet sind, die sich materialsparend und daher kostengünstig aus einem einfachen Quadratblech herstellen läßt.

Weiterhin empfiehlt es sich, an den Schenkeln der Halteböckchen an sich bekannte örtliche Ausdrückungen od.dgl. vorzusehen, welche als Zentrierorgane für die Radschüssel dienen und vor allem die Montage der Radschüssel erleichtern, aber auch den Rundlauf des montierten Rades aufgrund der Zentrierung verbessern.

Die Erfindung wird nachfolgend im Zusammenhang mit dem in der Zeichnung dargestellten bevorzugten Ausführungsbeispiel näher erläutert. In der Zeichnung zeigen :

Fig. 1 ein erfindungsgemäßes Spurverstellrad in einer Ansicht ;

Fig. 2 das Spurverstellrad nach Fig. 1 im radialen Schnitt nach Linie II-II der Fig. 1 ;

Fig. 3 in größerem Maßstab und im radialen Schnitt den Befestigungsbereich der Radschüssel am Felgentiefbett des Spurverstellrades nach den Fig. 1 und 2.

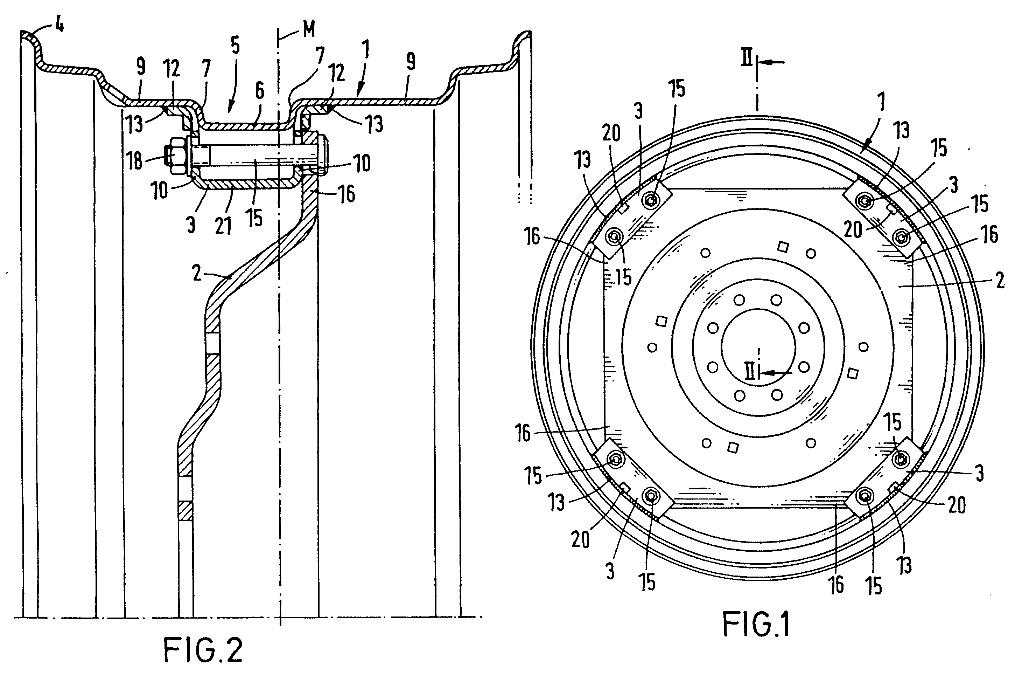

Das als Scheibenrad ausgebildete Spurverstellrad nach den Fig. 1 bis 3 besteht in seinen Hauptteilen aus der Felge 1, welche den (nicht dargestellten) Reifen trägt, der Radschüssel 2 als Verbindungsstück zwischen Felge und Radnabe und Halteböckchen 3, welche der lösbaren und umsetzbaren Verbindung der Radschüssel 2 mit der Felge 1 dienen.

Wie vor allem Fig. 2 zeigt, ist die einteilige Felge 1 als Doppeltiefbettfelge (DW-Felge) ausgebildet, hier als eine zur Mittelachse M der Felge asymetrische Doppeltiefbettfelge mit gegenüber der Felgenmitte in Achsrichtung des Spurverstellrades, d.h. in Richtung auf das eine Felgenhorn 4 versetztem Tiefbett 5, dessen Boden mit 6 und dessen beide Seitenflanken mit 7 bezeichnet sind. Die Tiefbettflanken 7 gehen mit einer gewissen Krümmung, dem Tiefbettradius 8 in die Fläche 9 des Felgentiefbettes über. Die beiden Tiefbettflanken 7 bilden mit ihren Außenflächen seitliche Anlage- und Abstützflächen für die Halteböckchen 3.

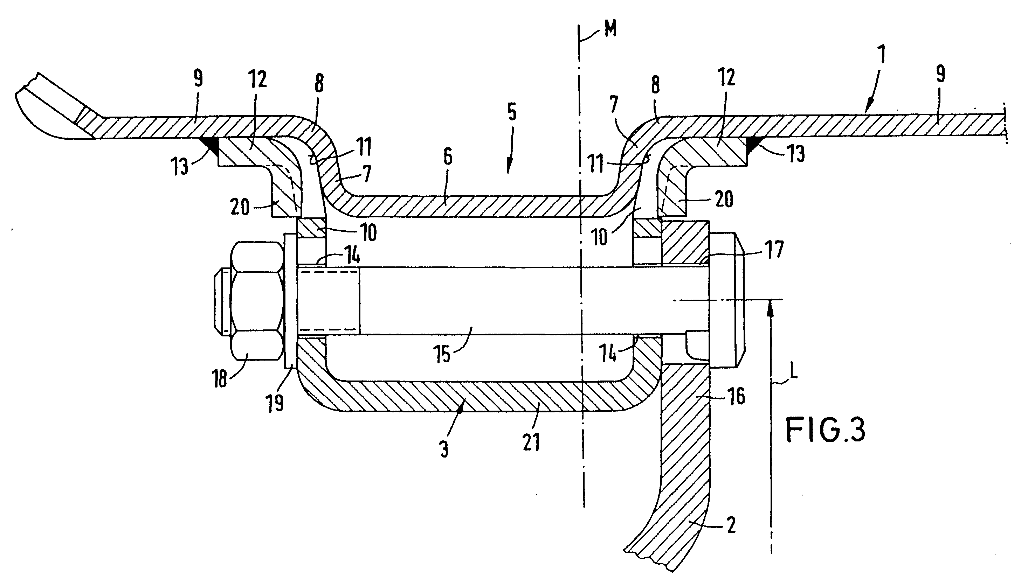

Die im Querschnitt grob angenähert U-förmigen Halteböckchen 3 stützen sich mit ihren beiden Schenkeln 10 an den Außenflächen 11 der Tiefbettflanken 7 ab, wodurch in axialer Richtung eine Formschlußverbindung der Halteböckchen 3 mit der Felge 1 erreicht wird. Wie insbesondere Fig. 3 zeigt, ist die Anordnung so getroffen, daß sich die Schenkel 10 der Halteböckchen 3 mit ihren freien Endbereichen der Außenkontur der Tiefbettflanken 7 und der Tiefbettradien 8 eng anschmiegen, wodurch eine großflächige Abstützung der Schenkel 10 an den betreffenden Flächen der Felge 1 erreicht wird. Die Enden der beiden Schenkel 10 der Halteböckchen 3 sind zu nach außen gerichteten Flanschen 12 abgebogen, die sich am Innenumfang der Felge flächig abstützen und die ihrerseits endseitig über Schweißnähte 13 mit der Felge 1 verbunden sind. Die Schweißnähte 13 erstrecken sich demgemäß in Richtung des Felgenunfanges im wesentlichen über die gesamte Umfangslänge der Halteböckchen 3 bzw. ihrer Schenkel 10.

Die Halteböckchen 3 liegen mit ihren beiden Schenkeln 10 unter einer gewissen Vorspannung an den Tiefbettflanken 7 an. Bei der Herstellung der Halteböckchen 3 wird der Innenabstand ihrer beiden Schenkel 10 so eingestellt, daß er im Abstützungsbereich etwas kleiner ist als der Außenabstand der Anlageflächen der Tiefbettflanken 7. Demgemäß werden die Halteböckchen 3 unter einer gewissen elastischen Ausbiegung ihrer Schenkel 10 von innen her auf die Tiefbettausformung gedrückt, wodurch die Flächenvorspannung erreicht wird. Anschließend werden die Halteböckchen 3 mit Hilfe der Schweißnähte 13 an der Felge 1 festgelegt.

Die etwa U-förmigen Halteböckchen 3 weisen an ihren beiden Schenkeln 10 Bolzenlöcher 14 für axiale Schrauben 15 auf, mit deren Hilfe die Radschüssel 2 in den unterschiedlichen Spureinstellpostionen an den Halteböckchen 3 angeschlossen wird. Die Radschüssel 2 weist hierbei an ihren sich seitlich gegen die Halteböckchen 3 anlegenden Schüssellappen 16 entsprechende Bolzenlöcher 17 für die Befestigungsschrauben 15 auf. Mit 18 sind die auf die Schrauben 15 aufgedrehten Muttern bezeichnet, die sich über die Unterlegscheiben 19 gegen den gegenüberliegenden Schenkel 10 abstützen. Die in Umfangsrichtung der Felge 1 verlaufenden Schweißnähte 13 werden aufgrund der Abstützung der Schenkel 10 an den Flächen 11 der Tiefbettflanken 7 unter Vorspannung von den axialen Schraubenkräften nicht ungünstig belastet.

Vorzugsweise wird die Anordnung so getroffen, daß sich die Befestigungsschrauben 15 in möglichst kleinem radialen Abstand zum innersten Tiefbettboden 6 befinden. Dabei sollte das Verhältnis vom Innendurchmesser des Felgentiefbettes (am Tiefbettboden 6) zum Anschraublochkreis L höchstens gleich etwa 1,06 sein.

Wie Fig. 1 zeigt, ist die Radschüssel 2 als vierlappige Schüssel gefertigt, deren vier Lappen 16 an den Ecken der im Umriß quadratischen Schüssel angeordnet sind. Eine solchen Radschüssel läßt sich materialsparend aus Quadratblechen fertigen. An jeder Ecke der Schüssel 2, d.h. an jedem Schüssellappen 16 befindet sich ein Halteböckchen 3, das als Doppelböckchen ausgebildet ist, also an seinen Schenkeln 10 zwei in Umfangsrichtung der Felge 1 zueinander versetzte Lochpaare 14 für zwei Schrauben 15 aufweist. Die Radschüssel 2 wird demgemäß mit Hilfe von acht Schrauben 15 an den vier Halteböckchen 3 der Felge 1 angeschlossen.

Jedes der Halteböckchen 3 weist etwa in seiner Mitte ein Zentrierorgan 20 für die Zentrierung der Radschüssel 2 bei ihrer Montage auf. Wie vor allem Fig. 3 zeigt, bestehen die Zentrierorgane 20 aus örtlichen Ausdrückungen der Schenkel 10 der Halteböckchen 3. Diese Ausdrückungen können dadurch hergestellt werden, daß die Schenkel an den betreffenden Stellen etwa U-förmige Einschnitte erhalten, worauf die durch diese Einschnitte an drei Umfangsseiten aus dem Schenkelverband gelösten Zungen zur Bildung der Zentrierorgane 20 aus der Schenkelebene nach außen gedrückt werden. Fig. 3 zeigt ebenso wie Fig. 1 einen Schnitt durch die Halteböckchen 3 in der Ebene der Zentrierorgane 20. Letztere bilden Zentrieranschläge, die mit den äußeren Umfangsflächen der Lappen 16 der Radschüssel 2 zusammenwirken.

Die dargestellten Halteböckchen 3 nach der Erfindung werden vorzugsweise als U-Böckchen aus Blech gefertigt. Sie können mit Verstärkungen oder Aussteifungen u.dgl. versehen werden. Beispielsweise können die beiden Schenkel 10 der Halteböckchen 3 zwischen dem U-Steg 21 und dem Boden 6 des Tiefbettes durch eingesetzte bzw. eingeschweißte Verstärkungsstege oder auch Rohrabschnitte, durch welche die Schrauben 15 hindurchgesteckt werden können, gegeneinander abgestützt und ausgesteift werden.

Es ist erkennbar, daß aufgrund der Formschlußverbindung der Halteböckchen 3 mit der Tiefbettausformung der Felge 1 die in Umfangsrichtung verlaufenden Schweißnähte 13 von den axialen Radkräften entlastet sind und daß hierdurch insgesamt der Anschluß der Radschüssel 2 an der Felge 1 belastungsmäßig günstiger und stabiler gestaltet wird. Es wäre auch denkbar, die Halteböckchen 3 an ihren Schenkeln 10 bzw. den Flanschen 12 in anderer Weise, z.B. durch Punktschweißen oder Vernieten mit der Felge 1 zu verbinden, obwohl eine Lichtbogen-Schweißnahtverbindung im allgemeinen vorzuziehen ist. Die Lage des Tiefbettes 6 an der Felge ist, wie erwähnt, auf das Verstellmaß, d.h. den Spursprung abgestimmt, so daß sich vorzugsweise acht Spureinstellungen in gleichgroßen Einstellstufen ergeben.

Es versteht sich, daß die Halteböckchen 3 von unterschiedlicher Ausbildung sein können und auch, wie bekannt, aus kleineren Einzelböckchen für nur ein einzige Befestigungsschraube 15 bestehen können. Die Anzahl der Halteböckchen 3 auf dem Umfang der Felge 1 kann in Anpassung an die jeweilige Radschüssel 2 unterschiedlich sein, obwohl, wie erwähnt, vorzugsweise eine vierlappige Radschüssel mit jeweils zwei Schraubenbolzen 15 an jedem Lappen Verwendung findet.

## Ansprüche

1. Spurverstellrad, insbesondere für Schlepper u.dgl., mit einer an Halteböckchen der Felge lösbar und versetzbar angeordneten Radschüssel, wobei die über den Innenumfang der Felge verteilt angeordneten Halteböckchen im Querschnitt etwa U-förmig ausgebildet sind und an ihren Schenkeln, die mit fluchtenden Bolzenlöchern für der Radschüsselbefestigung dienende axiale Schrauben versehen sind, nach außen gerichtete, sich gegen den Felgenboden legende Flansche aufweisen, an denen sie mittels im Felgenumfangsrichtung verlaufender Schweißnähte mit der Felge verbunden sind, **dadurch gekennzeichnet, daß**
   - die Felge (1) als Doppeltiefbettfelge (DW-Felge) ausgebildet ist und
   - die Halteböckchen (3) mit einem der Tiefbettbreite angepaßten Innenabstand ihrer Schenkel (10) ausgebildet sind, sich mit ihren Schenkelendbereichen der Außenkontur der Tiefbettflanken (7) und ihrer Tiefbettradien (8) eng anschmiegen und sich mit ihren Schenkeln (10) in Axialrichtung des Spurverstellrades an den Tiefbettflanken (7) formschlüssig abstützen.

2. Spurverstellrad nach Anspruch 1, **dadurch gekennzeichnet, daß** das Tiefbett der Doppeltiefbettfelge (1) gegenüber der Felgenmitte (M) um ein dem Spursprung angepaßtes Maß in Achsrichtung versetzt ist.

3. Spurverstellrad nach Anspruch 1 oder 2, **dadurch gekennzeichnet,** daß die Halteböckchen (3) mit ihren Schenkeln (10) unter Vorspannung an den Tiefbettflanken (7) anliegen.

4. Spurverstellrad nach einem der Ansprüche 1 bis 3, **dadurch gekennzeichnet,** daß die Bolzenlöcher (14) an den Schenkeln (10) der Halteböckchen (3) so angeordnet sind, daß sich die Schrauben (15) in engem radialen Abstand zum Boden (6) des Felgentiefbettes befinden, wobei das Verhältnis vom Innendurchmesser des Felgentiefbettes zum Anschraublochkreis (L) gleich oder kleiner ist als etwa 1,06.

5. Spurverstellrad nach einem der Ansprüche 1 bis 4, **dadurch gekennzeichnet,** daß die Halteböckchen (3), wie bekannt, als Doppelböckchen für den Anschluß einer vierlappigen Radschüssel (2) ausgebildet sind.

6. Spurverstellrad nach einem der Ansprüche 1 bis 5, **dadurch gekennzeichnet,** daß die Schenkel (10) der Halteböckchen (3) mit örtlichen Ausdrückungen od.dgl. als Zentrierorgane (20) für die Radschüssel (2) versehen sind.

## Claims

1. A track width adjustment wheel, especially for tractors and the like, with a detachable and adjustable wheel plate disposed at retaining brackets on the rim, wherein the retaining clamps disposed distributed over the internal circumference of the rim are formed approximately U-shaped in cross-section and have outward facing flanges at their sides seated against the base of the rims, which sides are provided with aligned bolt holes for the axial bolts which serve to fasten the wheel plate, and where the retaining clamps are joined to the rim at the flanges by means of welded seams running in the direction of the circumference of the rim, characterised in that
   - the rim (1) is formed as a double drop base rim (DW rim) and
   - the retaining clamps (3) are formed with one of the internal spacing between their sides (10) adapted to the drop base width, conform closely at the end regions of their sides to the external contours of the edges of the drop base and are supported with their sides (10) having a close positive fit with the edges (7) of the drop base and the drop base radii (8) in the axial direction of the track width adjustment wheel.

2. A track width adjustment wheel according to Claim 1, characterised in that the drop base of the double drop base rim (1) is displaced axially with respect to the centre of the rim (M) by an amount adapted to the jump in the track.

3. A track width adjustment wheel according to Claims 1 or 2, characterised in that the retaining clamps (3) abut the edges (7) of the drop base with their sides (10) under an initial stress.

4. A track width adjustment wheel according to any one of Claims 1 to 3, characterised in that the bolt holes (14) at the sides of the retaining clamps are arranged so that the bolts (15) are located within a close radial distance of the base (6) of the drop base of the rim, where the ratio of the internal diameter of the drop base of the rim to the diameter of the pitch circle (L) of the bolt holes is less than or equal to 1.06.

5. A track width adjustment wheel according to any one of Claims 1 to 4, characterised in that the retaining clamps (3), as is known, are formed as double clamps for the connection of a wheel plate (2) with four leaves.

6. A track width adjustment wheel according to any one of claims 1 to 5, characterised in that the sides (10) of the retaining clamps (3) are provided with local pressings or similar as centring devices for the wheel plate (2).

## Revendications

1. Roue à voie réglable, en particulier pour tracteur ou analogue, avec un flasque de roue monté amovible et déplaçable sur des supports de maintien de la jante, les supports de maintien, répartis sur la périphérie intérieure de la jante, étant réalisés avec une section à peu près en U et présentant sur leurs ailes, pourvues de trous à boulons alignés pour les vis axiales servant à la fixation du flasque de roue, des rebords orientés vers l'extérieur, s'appuyant contre le fond de jante, par lesquels ils sont reliés à la jante, grâce à des cordons de soudure s'étendant en direction périphérique, caractérisé en ce que
— la jante (1) est réalisée sous forme de jante à base creuse double (jante DW), et
— les supports de maintien (3) sont réalisés avec un espacement intérieur de leurs ailes (10), adapté à la largeur de la base creuse, en épousant étroitement avec leurs zones d'extrémité d'aile le contour extérieur des flancs de base creuse (7) et les rayons de la base creuse (8) et prenant appui, par ajustement de forme, grâce à leurs ailes (10), en direction axiale de la roue à voie variable, sur les flancs de base creuse (7).

2. Roue à voie réglable selon la revendication 1, caractérisé en ce que la base creuse de la jante à base creuse double (1) et décalée en direction axiale, d'une valeur adaptée au saut de voie, par rapport au centre de jante (M).

3. Roue à voie réglable selon la revendication 1 ou 2, caractérisé en ce que les supports de maintien (3) s'appuient sous précontrainte, avec leurs ailes (10), sur les flancs de base creuse (7).

4. Roue à voie réglable selon l'une des revendications 1 à 3, caractérisé en ce que les trous à boulons (14) sont disposés sur les ailes (10) des supports de maintien (3), de façon telle que les vis (15) se trouvent à une faible distance radiale du fond (6) de la base creuse de jante, le rapport entre diamètre intérieur de la base creuse de jante et cercle de vissage (L) étant égal ou inférieur à environ 1,06.

5. Roue à voie réglable selon l'une des revendications 1 à 4, caractérisé en ce que les supports de maintien (3) sont réalisés, de façon connue, sous forme de supports doubles pour le raccordement d'un flasque de roue à quatre pattes.

6. Roue à voie réglable selon l'une des revendications 1 à 5, caractérisé en ce que les ailes (10) des supports de maintien (3) sont pourvues d'enfoncements locaux ou analogues, servant d'organes de centrage (20) pour le flasque de roue (2).

FIG.2

FIG.1

EP 0 319 694 B1

FIG.3

EP 0 319 694 B1